# EUROPEAN PATENT APPLICATION

(11) **EP 1 185 120 A1**
(43) Date of publication of application: **06.03.2002**
(21) Application number: 01917605.6
(22) Date of filing: 29.03.2001
(51) Int. Cl.: H04Q 7/22

(54) **BASE STATION APPARATUS AND HANDOVER CONTROL METHOD**

(30) Priority: 30.03.2000 JP 2000093943
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 238-0031 (JP); KITADE, Takashi, Yokosuka-shi, Kanagawa 239-0847 (JP)
(74) Representative: Grünecker, Kinkeldey, Stockmair & Schwanhäusser Anwaltssozietät
(86) International application number: JP0102640
(87) International publication number: WO0176287

(57) **Abstract**

During handover, reception power measuring section A103 measures a power value of a signal received via antenna A101 corresponding to sector A and reception power measuring section B105 measures a power value of a signal received via antenna B104 corresponding to sector B, comparison section 107 compares the power values, control section 108 determines whether a signal should be sent using a time slot corresponding to sector A or a time slot corresponding to sector B based on the comparison result and carries out switching control of switch 109. In this way, the status of time slot assignment during handover is changed as appropriate for every one frame.

## Description

### Technical Field

The present invention relates to a base station apparatus and handover control method, and more particularly, to a base station apparatus and handover control method used in a TDD (Time Division Duplex) based radio communication system.

### Background Art

In a cellular type mobile communication system, a mobile station normally carries out handover near a cell boundary whereby the mobile station switches the communication partner from one base station to another. Furthermore, the mobile station carries out handover between sectors in much the same way as for handover between cells. There are roughly two types of handover method; soft handover and hard handover.

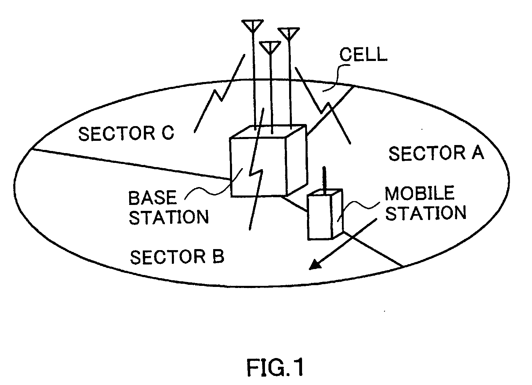

Inter-sector handover carried out in a TDD-based radio communication system will be explained using FIG.1 to FIG.3 below. Here, a TDD system refers to a system in which a channel of a same frequency band is divided into time slots and each time slot is assigned a communication channel for downlink (channel for the base station to send a signal to the mobile station) and a communication channel for uplink (channel for the mobile station to send a signal to the base station).

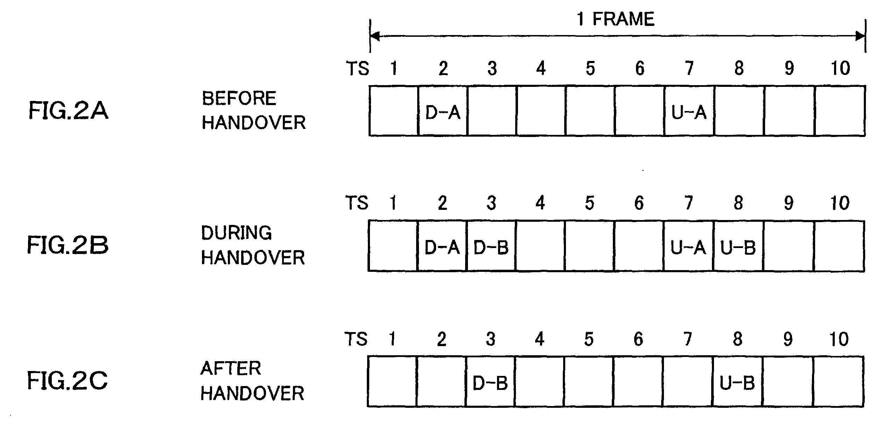

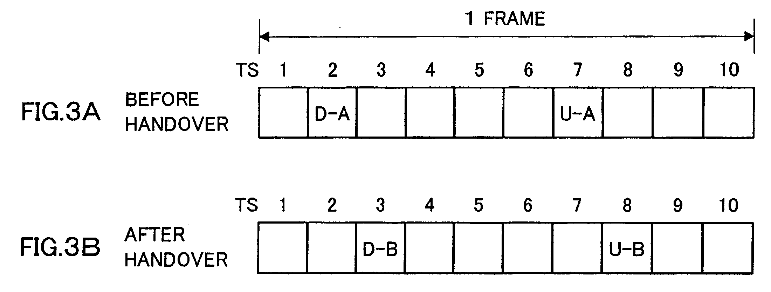

FIG.1 is a conceptual diagram showing a cell and sectors of a radio communication system and FIG.2A to FIG.2C show examples of how time slots are assigned while soft handover is being executed and FIG.3A and FIG.3B show examples of how time slots are assigned while hard handover is being executed.

As shown in FIG.1, one base station exists in one cell. The cell is divided into three sectors A to C. The mobile station is now moving from sector A to sector B. In the following explanations, suppose a time slot is TS, a downlink communication channel corresponding to sector A is D-A, an uplink communication channel corresponding to sector A is U-A, a downlink communication channel corresponding to sector B is D-B, and an uplink communication channel corresponding to sector B is U-B.

First, a case where soft handover takes place between sectors will be explained. When the mobile station exists in sector A (that is, before handover), the base station is only sending a signal to sector A. Therefore, as shown in FIG.2A, D-A is assigned to TS2 and U-A is assigned to TS7.

Then, when the mobile station moves from sector A to sector B and reaches the boundary between sector A and sector B, the base station sends a signal to both sector A and sector B. Therefore, as shown in FIG.2B, D-B is newly assigned to TS3 and U-B is newly assigned to TS8. As a result, the communication channels are assigned during handover as shown in FIG.2B. That is, when the mobile station reaches the boundary between sector A and sector B, the mobile station communicates with the base station using both the communication channel corresponding to sector A and the communication channel corresponding to sector B. Thus, the state of communication between the mobile station and the base station is handover in progress.

Then, when the mobile station completely enters into sector B, the base station sends a signal only to sector B. Thus, as shown in FIG.2C, communication channels are no longer assigned to TS2 and TS7 and the mobile station communicates with the base station using D-B assigned to TS3 and U-B assigned to TS8. With this, the handover ends.

Thus, soft handover includes a period in which communication is carried out using both the communication channel corresponding to sector A and the communication channel corresponding to sector B as shown in FIG.2B.

Then, a case where hard handover takes place between sector swill be explained. When the mobile station exists in sector A (that is, before handover), the communication channels are assigned as shown in FIG.3A in the same way as for the case with the above-described soft handover (FIG.2A). That is, as shown in FIG.3A, D-A is assigned to TS2 and U-A is assigned to TS7.

Then, when the mobile station moves from sector A to sector B and reaches the boundary between sector A and sector B, the status of communication channel assignment changes as shown in FIG.3A to FIG.3B. That is, when the mobile station reaches the boundary between sector A and sector B, the base station stops sending a signal to sector A and at the same time starts sending a signal to sector B. Thus, as shown in FIG.3B, there are no more communication channels assigned to TS2 and TS7 and the mobile station communicates with the base station using D-B assigned to TS3 and U-B assigned to TS8. With this, the handover ends.

Thus, hard handover has no period during which a communication is carried out using both the communication channel corresponding to sector A and communication channel corresponding to sector B as in the case of soft handover.

However, the conventional soft handover and conventional hard handover described above have the following advantages and disadvantages.

That is, the above-described conventional soft handover carries out a communication during handover using both the communication channel corresponding to sector A and communication channel corresponding to sector B as shown in FIG.2B.

That is, when soft handover takes place, a communication is carried out using a plurality of time slots of the downlink. Thus, soft handover can reduce the possibility that the communication channel will be interrupted during handover and can thereby improve the reception performance of the mobile station. But nonetheless, soft handover has a disadvantage that interference with communications being carried out with other mobile stations increases. This disadvantage is attributable in the case of a TDD system to the fact that signals from a plurality of mobile stations are normally multiplexed on one time slot according to a CDMA (Code Division Multiple Access) system.

On the other hand, the above-described conventional hard handover has no period during which a communication is carried out using both the communication channel corresponding to sector A and communication channel corresponding to sector B as in the case of soft handover. That is, during hard handover, a communication is always carried out using only one time slot of the downlink. Thus, while hard handover has an advantage of being able to reduce interference with communications being carried out with other mobile stations, hard handover has a disadvantage of increasing the possibility that the communication channel will be interrupted during handover, unable to improve the reception performance of the mobile station so much.

Thus, the conventional soft handover and conventional hard handover described above have their respective advantages and disadvantages.

### Disclosure of Invention

It is an object of the present invention to provide a base station apparatus and handover control method capable of suppressing interference with communications being carried out with other communication partners and reducing the possibility that the communication channel will be interrupted.

In order to attain the above object, the present invention transmits signals using any one of time slots corresponding to sectors during handover based on results of comparison in propagation path conditions of the respective sectors.

### Brief Description of Drawings

FIG.1 is a conceptual diagram of a cell and sectors of a radio communication system;
FIG.2A is a schematic view showing an example (before handover) of how time slots are assigned during execution of soft handover;
FIG. 2B is a schematic view showing an example (during handover) of how time slots are assigned during execution of soft handover;
FIG.2C is a schematic view showing an example (after handover) of how time slots are assigned during execution of soft handover;
FIG. 3A is a schematic view showing an example (before handover) of how time slots are assigned during execution of hard handover;
FIG.3B is a schematic view showing an example (after handover) of how time slots are assigned during execution of hard handover;
FIG.4 is a main block diagram showing an outlined configuration of a base station apparatus according to an embodiment of the present invention;
FIG. 5A is a schematic view showing an example (before handover) of how time slots are assigned during execution of handover to explain an operation of the base station apparatus according to the embodiment of the present invention;
FIG. 5B is a schematic view showing an example (during handover) of how time slots are assigned during execution of handover to explain an operation of the base station apparatus according to the embodiment of the present invention;
FIG. 5C is a schematic view showing an example (during handover) of how time slots are assigned during execution of handover to explain an operation of the base station apparatus according to the embodiment of the present invention; and
FIG. 5D is a schematic view showing an example (after handover) of how time slots are assigned during execution of handover to explain an operation of the base station apparatus according to the embodiment of the present invention.

### Best Mode for Carrying out the Invention

With reference now to the attached drawings, an embodiment of the present invention will be explained in detail below.

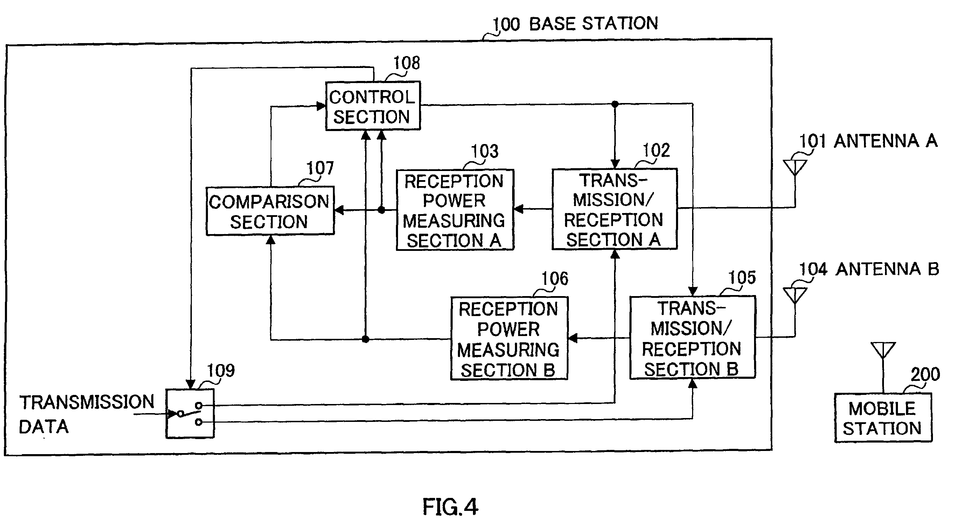

FIG.4 is a main block diagram showing an outlined configuration of a base station apparatus according to an embodiment of the present invention. In FIG.4, base station 100 carries out a radio communication with mobile station 200. Furthermore, suppose this base station 100 exists in a cell which is divided into three sectors A to C as shown in FIG.1. However, for convenience of explanations, this embodiment will be explained focused on sector A and sector B.

Antenna A101, transmission/reception section A102 and reception power measuring section A103 are provided for sector A. Transmission/reception section A102 applies predetermined radio processing and predetermined demodulation processing to a signal received via antenna A101. After applying predetermined modulation processing to transmission data, transmission/reception section A102 sends the transmission data to sector A using a specific time slot. Reception power measuring section A103 measures a power value of the reception signal.

On the other hand, antenna B104, transmission/reception section B105 and reception power measuring section B106 are provided for sector B. Transmission/reception section B105 applies predetermined radio processing and predetermined demodulation processing to a signal received via antenna B104. After applying predetermined modulation processing to transmission data, transmission/reception section B105 sends the transmission data to sector B using a specific time slot. Reception power measuring section B106 measures a power value of the reception signal.

Comparison section 107 compares the power value measured by reception power measuring section A103 with the power value measured by reception power measuring section B106. Control section 108 controls operations of transmission/reception section A102 and transmission/reception section B105 based on the power values measured by reception power measuring section A103 and reception power measuring section B106. Furthermore, control section 108 performs switching control of switch 109 based on the power values measured by reception power measuring section A103 and reception power measuring section B106.

Then, an operation of the base station apparatus in the above configuration will be explained. FIG.5A to FIG.5D are schematic views showing examples of how time slots are assigned during execution of handover to explain the operation of the base station apparatus according to an embodiment of the present invention.

As shown in FIG.1, suppose mobile station 200 is moving from sector A to sector B. In the following explanations, suppose a time slot is TS, the downlink communication channel corresponding to sector A is D-A, the uplink communication channel corresponding to sector A is U-A, the downlink communication channel corresponding to sector B is D-B, and the uplink communication channel corresponding to sector B is U-B. Furthermore, suppose signals transmitted using D-A, U-A, D-B and U-B are called a "D-A signal", "U-A signal", "D-B signal" and "U-B signal", respectively.

First, when mobile station 200 exists in sector A (that is, before handover), transmission/reception section A102 is sending the D-A signal to mobile station 200. At this time, switch 109 is set to realize such a connection state that the transmission data is input to transmission/reception section A102. Before handover, transmission/reception section A102 receives the U-A signal sent from mobile station 200. Thus, as shown in FIG.5A, D-A is assigned to TS2 and U-A is assigned to TS7 before handover.

The signal subjected to demodulation processing, etc. by transmission/reception section A102 is output to reception power measuring section A103. Then, the power value of the reception signal is measured by reception power measuring section A103. The measured reception power value is output to control section 108.

Control section 108 compares the reception power value measured by reception power measuring section A103 and a predetermined threshold of the reception power value. Then, when the reception power value measured by reception power measuring section A103 becomes smaller than the predetermined threshold, that is, when mobile station 200 comes close to the boundary between sector A and sector B, control section 108 starts the operation of transmission/reception section B105. Thus, the U-A signal sent from mobile station 200 is received by both transmission/reception section A102 and transmission/reception section B105. This causes the status of communication between base station 100 and mobile station 200 to change to "handover in progress".

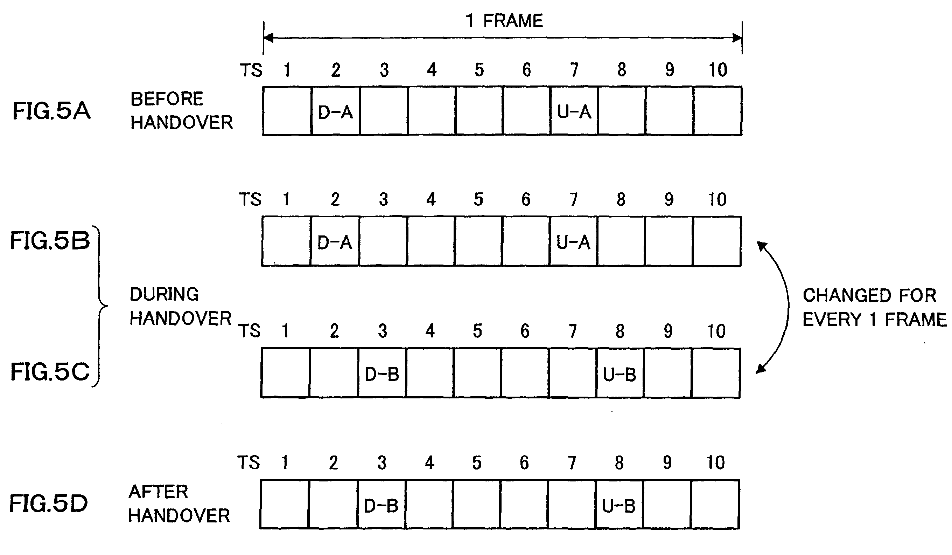

During handover, base station 100 sends data to mobile station 200 while switching between transmission/reception section A102 and transmission/reception section B105 as appropriate based on the power value of the reception signal. That is, during handover, the status of time slot assignment is switched between the status as shown in FIG.5B and the status as shown in FIG.5C as appropriate based on the power value of the reception signal. More specifically, base station 100 operates as follows, and thereby the status of time slot assignment is changed as appropriate.

That is, in the status as shown in FIG.5B, the U-A signal sent to base station 100 is received by both transmission/reception section A102 and transmission/reception section B105. The received signal is subjected to predetermined radio processing and predetermined demodulation processing by transmission/reception section A102 and transmission/reception section B105, and output to reception power measuring section A103 and reception power measuring section B106, respectively.

Reception power measuring section A103 measures the power value of the U-A signal received via antenna A101. On the other hand, reception power measuring section B106 measures the power value of the U-A signal received via antenna B104. The measured reception power values are both output to comparison section 107.

Comparison section 107 compares the reception power value measured by reception power measuring section A103 and the reception power value measured by reception power measuring section B106, and outputs the comparison result to control section 108.

In the next transmission frame, control section 108 determines which of D-A or D-B should be used to send data to mobile station 200.

In the status as shown in FIG.5B, if the power value of the U-A signal received via antenna A101 is equal to or greater than the power value of the U-A signal received via antenna B104, control section 108 determines to send data using D-A in the next frame. Then, control section 108 controls switch 109 so that the transmission data is input to transmission/reception section A102. This causes the transmission data to be sent to sector A via antenna A101.

Thus, in the status shown in FIG.5B, when the power value of the U-A signal received via antenna A101 is equal to or greater than the power value of the U-A signal received via antenna B104, the status of time slot assignment keeps the status shown in FIG.5B in the next frame, too.

On the other hand, when the power value of the U-A signal received via antenna A101 is smaller than the power value of the U-A signal received via antenna B104, control section 108 determines to transmit data using D-B in the next frame. Then, control section 108 controls switch 109 so that the transmission data is input to transmission/reception section B105. This causes the transmission data to be sent to sector B via antenna B104.

Thus, in the status shown in FIG.5B, when the power value of the U-A signal received via antenna A101 is smaller than the power value of the U-A signal received via antenna B104, the status of time slot assignment is changed from the status shown in FIG.5B to the status shown in FIG.5C in the next frame. That is, as shown in FIG.5C, there are no more communication channels assigned to TS2 and TS7, and base station 100 communicates with mobile station 200 using D-B assigned to TS3 and U-B assigned to TS8.

Now, after the status is changed from the status shown in FIG.5B to the status shown in FIG.5C, in the status shown in FIG.5C, the U-B signal sent from mobile station 200 is received by both transmission/reception section A102 and transmission/reception section B105. Then, in the same operation as that described above, control section 108 determines which of D-A or D-B should be used to send data to mobile station 200 in the next transmission frame.

By carrying out such an operation, the communication channel to be used in the frame that follows the current frame is determined based on the power value of the reception signal in the current frame during handover. That is, the status of time slot assignment during handover is switched as appropriate between the status shown in FIG.5B and the status shown in FIG.5C for every one frame.

Then, after a lapse of predetermined time since handover started, the mobile station 200 completely enters into the range of sector B, and therefore the status of time slot assignment is stabilized to the status shown in FIG.5D. Therefore, after a lapse of predetermined time since handover started, switch 109 is set to realize such a connection state that the transmission data is input to transmission/reception section B105. Furthermore, after a lapse of predetermined time since handover started, control section 108 stops the operation of transmission/reception section A102. With this, the handover ends.

As described above, during handover, this embodiment includes no period during which a communication is carried out using a plurality of downlink time slots as in the case of the above-described conventional soft handover. That is, this embodiment always carries out a communication using only one downlink time slot during handover. Thus, this embodiment can reduce interference with communications being carried out with other mobile stations.

Moreover, during handover, this embodiment changes the status of time slot assignment as appropriate so that a communication is carried out using a propagation path in which the reception power value increases, that is, a propagation path with less propagation loss. Thus, this embodiment can reduce the possibility of the communication channels being interrupted during handover compared to the above-described conventional handover.

Furthermore, this embodiment is used for a TDD-based radio communication system. Furthermore, this embodiment compares the reception power values of signals received from antennas provided corresponding to respective sectors (U-A signal or U-B signal) during handover and determines to which sector the signal (that is, D-A signal or D-B signal) should be sent in the next frame. The TDD system has a very high correlation between the uplink propagation path characteristic and downlink propagation path characteristic, and therefore there is a high correlation between the propagation path condition when a U-A signal or U-B signal is transmitted and the propagation path condition when a D-A signal or D-B signal is transmitted. Thus, this embodiment makes it possible to respond to instantaneous variations in the propagation path condition and always transmit a signal to a sector with a best propagation path condition.

In this embodiment, it is possible to switch between different statuses of time slot assignment during handover for every one frame. However, the unit of switching between different statuses of time slot assignment during handover is not limited to this. For example, in this embodiment, it is also possible to switch between different statuses of time slot assignment during handover for every error correcting block.

Furthermore, this embodiment does not put specific restrictions on a signal multiplexing system in each time slot. For example, in this embodiment, it is possible to use a CDMA system or OFDM (Orthogonal Frequency Division Multiplexing) system, etc. as a signal multiplexing system in each time slot.

Furthermore, for convenience of explanations, this embodiment has described the case where the number of sectors during handover is 2. However, this embodiment is not limited to this, but is also applicable to a radio communication system with three or more sectors during handover.

Furthermore, this embodiment adopts a configuration whereby the status of time slot assignment is changed as appropriate based on reception power values. However, this embodiment is not limited to this, and it is also possible to change the status of time slot assignment based on any values indicating a propagation path condition such as a propagation path loss value.

Furthermore, this embodiment has described handover between sectors. However, this embodiment is also applicable to handover between cells. In the case where this embodiment is applied to handover between cells, base station A will be equipped with antenna A101, transmission/reception section A102 and reception power measuring section A103, while base station B will be equipped with antenna B104, transmission/reception section B105 and reception power measuring section B106. In this case, comparison section 107 and control section 108 will be provided for the radio control station that controls base station A and base station B. Then, the radio control station will control the operations of base station A and base station B in the same way as that described above and will thereby carry out handover between cells between base station A and base station B.

Furthermore, this embodiment has adopted a configuration providing antennas in one-to-one correspondence with sectors. But this embodiment is not limited to this, and it is also possible to adopt a configuration with an array antenna forming directivities for respective sectors.

As described above, the present invention can suppress interference with communications being carried out with other communication partners during handover and reduce the possibility of communication channels of being interrupted.

This application is based on the Japanese Patent Application No.2000-093943 filed on March 30, 2000, entire content of which is expressly incorporated by reference herein.

### Industrial Applicability

The present invention is applicable to a radio communication apparatus such as a base station apparatus used in a TDD-based radio communication system.

## Claims

1. A base station apparatus comprising:
a comparator for comparing propagation path conditions of sectors using a signal received from a mobile station apparatus in the process of handover via antennas corresponding to the respective sectors; and
a transmitter for transmitting a signal to the mobile station apparatus using any one of time slots corresponding to the respective sectors based on the comparison result.

2. The base station apparatus according to claim 1, wherein said transmitter transmits the signal using a time slot corresponding to a sector having the best propagation path condition.

3. The base station apparatus according to claim 1, wherein said transmitter switches between time slots in frame units.

4. The base station apparatus according to claim 1, wherein said transmitter switches between time slots in error correcting block units.

5. A base station apparatus comprising:
a comparator for comparing a propagation path condition of a first sector and a propagation path condition of a second sector using a signal received from a mobile station apparatus in the process of handover via an antenna corresponding to the first sector and the signal received via an antenna corresponding to the second sector; and
a transmitter for transmitting a signal to the mobile station apparatus using either one of the time slot corresponding to the first sector or the time slot corresponding to the second sector based on the comparison result.

6. The base station apparatus according to claim 5, wherein said transmitter transmits the signal using the time slot corresponding to either one of the first sector or the second sector whichever has a better propagation path condition.

7. The base station apparatus according to claim 5, wherein said transmitter switches between the time slot corresponding to the first sector and the time slot corresponding to the second sector in frame units.

8. The base station apparatus according to claim 5, wherein said transmitter switches between the time slot corresponding to the first sector and the time slot corresponding to the second sector in error correcting block units.

9. A radio communication system comprising:
a plurality of base stations that estimates propagation path conditions of the own cell using a signal received from a mobile station apparatus in the process of handover; and
a radio control station that determines which of the time slots corresponding to the respective cells should be used to transmit a signal to the mobile station apparatus from which of said plurality of base stations based on the result of comparison of the propagation path conditions.

10. A handover control method comprising:
a comparing step of comparing propagation path conditions of sectors using a signal received from a mobile station apparatus in the process of handover via antennas corresponding to the respective sectors; and
a transmitting step of transmitting a signal to the mobile station apparatus using any one of time slots corresponding to the respective sectors based on the comparison result.

11. A handover control method comprising:
a comparing step of comparing a propagation path condition of a first sector and a propagation path condition of a second sector using a signal received from a mobile station apparatus in the process of handover via an antenna corresponding to the first sector and the signal received via an antenna corresponding to the second sector; and
a transmitting step of transmitting a signal to the mobile station apparatus using either one of the time slot corresponding to the first sector or the time slot corresponding to the second sector based on the comparison result.

12. A handover control method comprising:
a comparing step of comparing propagation path conditions of respective cells using a signal received from a mobile station in the process of handover by respective base stations; and
a determining step of determining which of the time slots corresponding to the respective cells should be used to transmit a signal to the mobile station from which of the base stations based on the comparison result.
